(19) Europäisches Patentamt
European Patent Office
Office européen des brevets

(11) **EP 4 361 577 A1**

(12) **EUROPÄISCHE PATENTANMELDUNG**

(43) Veröffentlichungstag:
**01.05.2024   Patentblatt 2024/18**

(21) Anmeldenummer: **22204168.3**

(22) Anmeldetag: **27.10.2022**

(51) Internationale Patentklassifikation (IPC):

| | |
|---|---|
| *G01F 13/00* (2006.01) | *B28B 13/00* (2006.01) |
| *B28C 7/04* (2006.01) | *B28C 7/06* (2006.01) |
| *B28C 7/16* (2006.01) | *B28C 9/00* (2006.01) |
| *E04G 21/02* (2006.01) | *E04G 21/04* (2006.01) |
| *G01B 9/00* (2006.01) | *G01B 11/00* (2006.01) |
| *G01B 21/00* (2006.01) | *G01C 15/00* (2006.01) |
| *G01F 15/075* (2006.01) | *G01F 17/00* (2006.01) |
| *G01F 22/00* (2006.01) | *G01S 17/00* (2020.01) |
| *G06K 7/00* (2006.01) | |

(52) Gemeinsame Patentklassifikation (CPC):
**G01F 13/001; B28B 13/0215; B28B 17/0081; E04G 21/025; G01C 15/00; G01F 13/006; G01F 13/008; G01F 15/0755; G01F 17/00; G01F 22/00; G01S 17/42; G01S 17/58; G01S 17/87; G01S 17/88**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **EBAWE Anlagentechnik GmbH
04838 Eilenburg (DE)**

(72) Erfinder: **SCHELER, Marcus
04838 Eilenburg (DE)**

(74) Vertreter: **Torggler & Hofmann Patentanwälte - Innsbruck
Torggler & Hofmann Patentanwälte GmbH & Co KG
Wilhelm-Greil-Straße 16
6020 Innsbruck (AT)**

(54) **VERFAHREN ZUR BESTIMMUNG EINES AUSTRAGES EINES VERTEILERKÜBELS**

(57)    Verfahren zur Bestimmung eines Austrages eines Verteilerkübels (2) mit folgenden Schritten:
- Ausbringen eines Baustoffs (3), insbesondere Beton oder zementgebundener Baustoff, aus einem Verteilerkübel (2),
- Erfassen zumindest eines Parameters, vorzugsweise einer Querschnittsfläche (A), eines aus einem Verteilerkübel (2) austretenden Baustoffs (3) mittels zumindest eines Laserscanners (4), vorzugsweise eines Lidar-Rotorscanners,
- Ermitteln eines Volumenstroms des austretenden Baustoffs (3) mit dem von dem zumindest einen Laserscanner (4) erfassten Parameter, und
- Ermitteln eines bereits ausgebrachten Volumens an Baustoff (3) aus dem ermittelten Volumenstrom.

Fig. 1

EP 4 361 577 A1

**Beschreibung**

Die Erfindung betrifft ein Verfahren zur Bestimmung eines Austrages eines Verteilerkübels sowie eine Vorrichtung zur Bestimmung eines Austrages eines Verteilerkübels mit einem solchen Verfahren.

Der Begriff "Verteilerkübel" ist in der vorliegenden Anmeldung weit auszulegen. Es handelt sich dabei um eine Vorrichtung mittels welcher, und aus welcher, Beton oder ein anderer Baustoff ausgebracht und in eine Schalung eingebracht werden kann. Der Verteilerkübel bevorratet dabei selbst den Beton oder Baustoff, welcher ausgebracht werden soll.

Zur Fertigung von Betonfertigteilen wird für das Einbringen von Beton in eine Schalung ein Verteilerkübel eingesetzt. Dabei ist es wichtig, dass in Abhängigkeit einer zu füllenden Schalung das richtige Volumen an Beton aus dem Verteilerkübel ausgebracht und in die Schalung eingebracht wird.

Im Stand der Technik wird mittels Wägezellen, über welche das Gewicht des Verteilerkübels bestimmt werden kann und einer Dichte des verwendeten Betons das in dem Verteilerkübel befindliche Volumen an Beton ermittelt und überwacht. Darauf aufbauend kann dann auch auf das aus dem Verteilerkübel ausgebrachte und in die Schalung eingebrachte Volumen an Beton geschlossen werden. Ist ausreichend Beton in der Schalung, so kann der Betonaustrag gestoppt werden. Dieses Verfahren weist allerdings einige Nachteile auf.

Aufgrund des hohen Gewichts eines gefüllten Verteilerkübels im Vergleich zu einem ungefüllten Verteilerkübel müssen Wägezellen mit einem großen Messbereich eingesetzt werden. Dadurch verringert sich jedoch die Auflösung der Wägezellen. Zudem kann es bei einer Gewichtsmessung zu Störeinflüssen durch Fliehkräfte kommen, wenn der Verteilerkübel bewegt wird. Außerdem ist der Beton im Verteilerkübel im Regelfall nicht homogen hinsichtlich seiner Dichte und Viskosität, was mit einem Verfahren gemäß dem Stand der Technik nicht berücksichtigt werden kann.

Ein alternativer Lösungsansatz zur Regulation eines Austrages eines Verteilerkübels ist beispielsweise eine mechanische Begrenzung des auszubringenden Betonvolumens. Dabei kommt es aber zu hohem Verschleiß. Außerdem treten auch hier Störfaktoren bei der Volumenbestimmung auf.

Aufgabe der Erfindung ist es, die zuvor beschriebenen Nachteile zumindest teilweise zu beheben und ein gegenüber dem Stand der Technik verbessertes Verfahren zur Bestimmung eines Austrages eines Verteilerkübels sowie eine Vorrichtung zur Bestimmung eines Austrages eines Verteilerkübels mit einem solchen Verfahren anzugeben.

Diese Aufgabe wird gelöst durch die Merkmale der unabhängigen Ansprüche 1 und 11.

Erfindungsgemäß sind demnach folgende Verfahrensschritte vorgesehen:

- Ausbringen eines Baustoffs, insbesondere Beton oder zementgebundener Baustoff, aus einem Verteilerkübel,
- Erfassen zumindest eines Parameters, vorzugsweise einer Querschnittsfläche, eines aus einem Verteilerkübel austretenden Baustoffs mittels zumindest eines Laserscanners, vorzugsweise eines Lidar-Rotorscanners,
- Ermitteln eines Volumenstroms des austretenden Baustoffs mit dem von dem zumindest einen Laserscanner erfassten Parameter, und
- Ermitteln eines bereits ausgebrachten Volumens an Baustoff aus dem ermittelten Volumenstrom.

Dadurch ist es möglich das bereits ausgebrachte Volumen an Beton, ohne einen Umweg über das Gewicht des ausgebrachten Betons, zu bestimmen. Somit lassen sich die mit der Verwendung von Gewichtszellen verbundenen Nachteile beheben.

Auch kommt es nicht zu übermäßigem Verschleiß oder Ähnlichem, da der Laserscanner ja nicht in Kontakt mit dem austretenden Beton kommt.

Eine erfindungsgemäße Vorrichtung weist zumindest die folgenden Bestandteile auf:

- Einen Verteilerkübel, wobei der Verteilerkübel zumindest eine Austragsöffnung zum Ausbringen von Baustoff aufweist,
- zumindest einen Laserscanner, vorzugsweise einen Lidar-Rotorscanner, zum Erfassen zumindest eines Parameters, vorzugsweise einer Querschnittsfläche, eines aus einem Verteilerkübel austretenden Baustoffs, und
- eine Datenverarbeitungseinheit zum Ermitteln eines Volumenstroms des austretenden Baustoffs und eines bereits ausgebrachten Volumens an Baustoff.

Weitere vorteilhafte Ausführungsformen der Erfindung werden in den abhängigen Ansprüchen definiert.

Bevorzugt kann vorgesehen sein, dass das Erfassen des zumindest einen Parameters mittels zumindest zweier Laserscanner erfolgt.

Dadurch ist eine präzisere Bestimmung des zumindest einen Parameters möglich.

Besonders vorteilhaft ist es, wenn die zumindest zwei Laserscanner mit gegenläufigen Scanrichtungen betrieben werden.

Dadurch wird eine gegenseitige Beeinflussung der zumindest zwei Laserscanner minimiert oder verhindert.

Bevorzugt kann vorgesehen sein, dass der zumindest eine Parameter eine Querschnittsfläche des aus dem Verteilerkübel austretenden Baustoffs ist.

Ein Volumenstrom und ein ausgebrachtes Volumen an Baustoff lassen sich nämlich einfach aus einer Querschnittsfläche bestimmen.

In einem Ausführungsbeispiel kann vorgesehen sein, dass die Erfassung der Querschnittsfläche zumindest die folgenden Schritte umfasst:

- Bestimmen einer Vielzahl an Messpunkte an einer Kontur des aus dem Verteilerkübel austretenden Baustoffs in einem, vorzugsweise globalen, Koordinatensystem mittels des zumindest einen Laserscanners,
- Verbinden der Messpunkte zu einem Profil oder Halbprofil des aus dem Verteilerkübel austretenden Baustoffs, und
- Ermitteln der Querschnittsfläche aus dem Profil oder dem Halbprofil.

Das stellt eine einfache und zuverlässige Möglichkeit zur Bestimmung einer Querschnittsfläche dar.

Es kann weiters vorgesehen sein, dass das Ermitteln des Volumenstroms zumindest folgende Schritte umfasst:

- Bestimmen einer Geschwindigkeit des aus dem Verteilerkübel austretenden Baustoffs beim Eintreten in einen Scanbereich des zumindest einen Laserscanners, und
- Ermitteln des Volumenstroms aus der Querschnittsfläche und der bestimmten Geschwindigkeit.

Das stellt eine einfache und zuverlässige Möglichkeit zur Bestimmung eines Volumenstroms dar.

Es kann dabei vorgesehen sein, dass die Geschwindigkeit aus einer Fallhöhe des Baustoffs zwischen einer Austragsöffnung eines Verteilerkübels und des Scanbereichs des zumindest einen Laserscanners bestimmt wird.

Es ist aber auch denkbar, dass die Geschwindigkeit über eine geeignete Vorrichtung gemessen oder aus Bilddaten einer Kamera ermittelt wird.

Vorteilhafterweise kann vorgesehen sein, dass das zwischen zwei erfassten Querschnittsflächen ausgebrachte Volumen aus dem Volumenstrom und einer Zeit zwischen dem Erfassen der zwei Querschnittsflächen ermittelt wird.

Besonders bevorzugt kann vorgesehen sein, dass das bereits ausgebrachte Volumen an Baustoff aus der Summe der ausgebrachten Volumina zwischen jeweils zwei erfassten Querschnittsflächen ermittelt wird.

Durch eine solche Ausführungsform kann sichergestellt werden, dass Änderungen im Querschnitt des austretenden Baustoffs berücksichtigt werden.

Alternativ ist auch denkbar, dass das Volumen in Abhängigkeit der gesamten, seit einem Austragungsbeginn vergangenen Zeit ermittelt wird. Hier können Änderungen im Querschnitt berücksichtigt werden, indem der Volumenstrom nach jedem Ermitteln der Querschnittsfläche neu bestimmt wird.

Besonders bevorzugt kann auch vorgesehen sein, dass in einem weiteren Verfahrensschritt ein Baustoffaustrag aus dem Verteilerkübel angehalten wird, wenn ein vorbestimmtes Volumen an Baustoff ausgetragen wurde.

Somit kann sichergestellt werden, dass in eine Schalung die richtige Menge an Beton eingebracht wird.

Hinsichtlich einer erfindungsgemäßen Vorrichtung kann vorgesehen sein, dass zumindest zwei Laserscanner vorgesehen sind.

Dadurch ist eine präzisere Bestimmung des zumindest einen Parameters möglich.

Vorteilhafterweise kann der zumindest eine Laserscanner im Bereich der zumindest einen Austrittsöffnung am Verteilerkübel angeordnet sein.

Dadurch wird die Auswirkung von Störeinflüssen bezüglich des austretenden Betons auf das Erfassen des zumindest einen Parameters minimiert.

Es kann vorgesehen sein, dass der zumindest eine Laserscanner eine Messfrequenz von zumindest 600 Hz aufweist. Somit kann eine ausreichend hohe Auflösung bei dem Erfassen des zumindest einen Parameters gewährleistet werden.

Besonders bevorzugt kann vorgesehen sein, dass eine Regel- und/oder Steuervorrichtung zur Regelung und/oder Steuerung eines Baustoffaustrags auf Basis des bereits ausgebrachten Volumens an Baustoff vorgesehen ist, vorzugsweise wobei die Regel- und/oder Steuervorrichtung Teil der Datenverarbeitungseinheit ist.

Somit kann sichergestellt werden, dass in eine Schalung die richtige Menge an Beton eingebracht wird.

Weitere Einzelheiten und Vorteile der Erfindung werden anhand der Figurenbeschreibung unter Bezugnahme auf die Zeichnungen im Folgenden näher erläutert. Darin zeigen:

Fig. 1    eine schematische Darstellung eines Funktionsprinzips,

Fig. 2    eine schematische Darstellung eines Modells zur Bestimmung einer Querschnittsfläche,

Fig. 3a   eine schematische Darstellung einer Vorrichtung, und

Fig. 3b   den Schnitt X-X der Figur 3a.

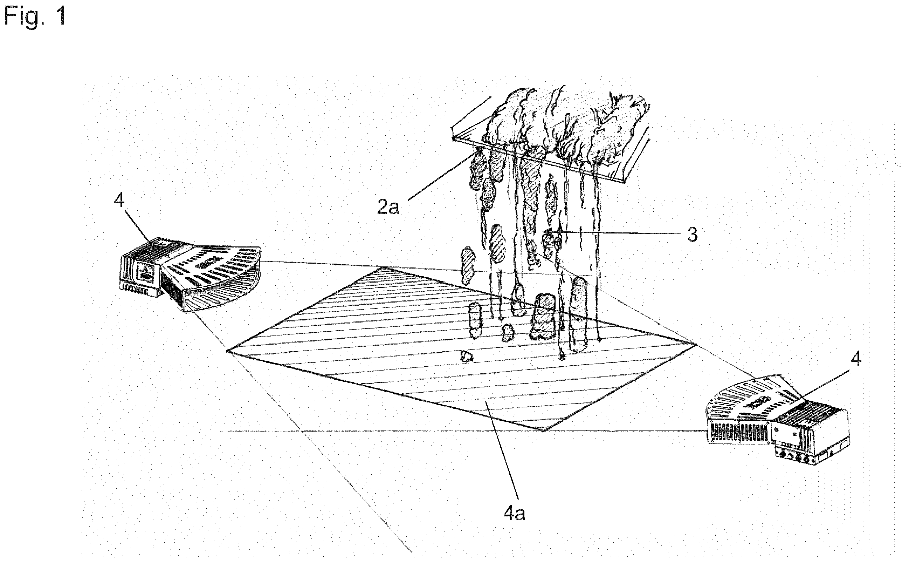

Die Figur 1 zeigt eine schematische Darstellung eines Funktionsprinzips. Es sind zwei gegenüberliegende Laserscanner 4 erkennbar, welche in Form von Lidar-Rotorscannern ausgebildet sind.

Die Laserscanner 4 spannen dabei einen Scanbereich 4a auf. Der Scanbereich 4a kann von einem Benutzer definiert werden und wird nur durch den Verschwenkbereich der Laserscanner 4 begrenzt. Dieser liegt im Regelfall im Bereich von rund 70°. Die Auflösung der Laserscanner 4 kann dabei im Bereich von rund 0,08° liegen.

Über eine Austragsöffnung 2a, in diesem Fall eine Rampe, wird Beton 3 ausgetragen, welcher durch den Scanbereich 4a der Laserscanner 4 fällt. Dabei wird durch die Laserscanner 4 zumindest ein Parameter, im vorliegenden Fall eine Querschnittsfläche A, erfasst. Aus dem zumindest einen Parameter kann dann ein Volumenstrom des Betons 3 sowie ein bereits ausgebrachtes Volumen an Beton 3 ermittelt werden.

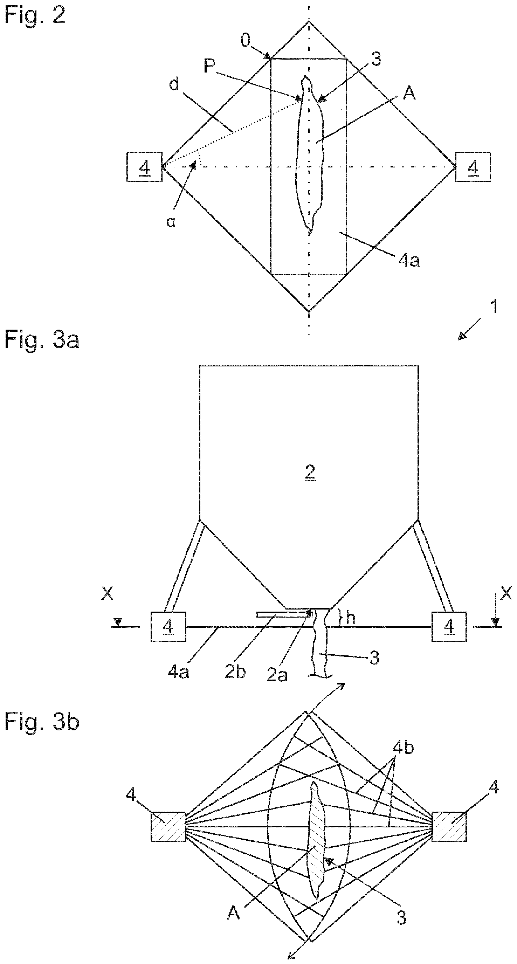

Anhand der Figur 2 kann das Vorgehen beim Ermitteln einer Querschnittsfläche A mittels der Laserscanner 4 erläutert werden.

Es ist wiederum ein Scanbereich 4a erkennbar, durch welchen der Beton 3 fällt. Der Beton 3 weist dabei eine Querschnittsfläche A auf.

Die Laserscanner 4 scannen den Scanbereich 4a von oben nach unten bzw. von unten nach oben ab. Dabei wird zu jedem Winkel α eine Distanz d ermittelt.

Nachdem die Position des Laserscanners 4 sowie des Punktes P an einer Kontur des Betons 3 über den Winkel α und die Distanz d bekannt sind, kann die Position des Punktes P in einem globalen Koordinatensystem bestimmt werden. Im gegenständlichen Bespiel liegt der Ursprung 0 dieses Koordinatensystems in einer Ecke des Scanbereichs 4a. Der Ursprung 0 kann aber grundsätzlich beliebig gewählt werden.

Wird dieser Vorgang nun für eine Vielzahl an Messwinkeln und für beide Laserscanner 4 wiederholt, so erhält man eine Vielzahl an Punkten P entlang einer Kontur des Betons 3 im globalen Koordinatensystem. Durch Verbinden der Punkte P kann dann ein Profil des Betons 3 im Scanbereich 4a und aus diesem die Querschnittsfläche A bestimmt werden.

Hier zeigt sich auch der Vorteil von zwei Laserscannern 4. Ist nur ein Laserscanner 4 vorhanden, so kann nur ein Halbprofil des Betons 3 erstellt werden. Zur Bestimmung der Querschnittsfläche A muss dieses Halbprofil dann gespiegelt werden, um auf ein vollständiges Profil zu kommen.

Befindet sich der austretende Beton 3 wie in der Figur 2 annähernd mittig im Scanbereich 4a, so ist es auch mit nur einem Laserscanner 4 möglich, die Querschnittsfläche A ausreichend genau zu bestimmen. Befindet sich der Beton 3 jedoch außermittig des Scanbereichs 4a, so wird die ermittelte Querschnittsfläche A aufgrund der Spiegelung des Halbprofils viel zu groß oder viel zu klein sein.

Ist die Querschnittsfläche A bestimmt, so kann in weiterer Folge ein Volumenstrom des austretenden Betons 3 ermittelt werden. Der Volumenstrom ergibt sich wie folgt aus der Querschnittsfläche A und der Geschwindigkeit v(h) des Betons 3 beim Eintritt in den Scanbereich 4a:

$$\dot{V} = A \cdot v(h)$$

Die Geschwindigkeit v(h) ergibt sich unter Vernachlässigung von Störfaktoren aus der Fallhöhe h sowie der Erdbeschleunigung g wie folgt:

$$v(h) = \sqrt{2gh}$$

Die Fallhöhe h beschreibt dabei den Abstand zwischen einer Austragsöffnung 2a und dem Scanbereich 4a. Die Fallhöhe h ist in der Figur 3a dargestellt.

Aus dem Volumenstrom lässt sich dann das ausgebrachte Volumen in einer bestimmten Zeit ermittelten. Dabei können die Volumina zwischen zwei ermittelten Querschnittsflächen aus der Zeit zwischen dem Erfassen der zwei Querschnittsflächen bestimmt werden. Das gesamte ausgebrachte Volumen ergibt sich dann aus der Summe der ausgebrachten Volumina zwischen jeweils zwei erfassten Querschnittsflächen.

Es ist aber auch denkbar, dass das Volumen in Abhängigkeit der gesamten, seit einem Austragungsbeginn vergangen Zeit ermittelt wird. Hier können Änderungen im Querschnitt berücksichtigt werden, indem der Volumenstrom nach jedem Ermitteln der Querschnittsfläche neu bestimmt wird.

Die Figur 3a zeigt eine schematische Darstellung einer Vorrichtung 1. Es ist ein Verteilerkübel 2 erkennbar, welcher eine Austragsöffnung 2a aufweist.

Über die Austragsöffnung 2a kann Beton 3 aus dem Verteilerkübel 2 ausgebracht werden. Über eine Schließvorrichtung 2b kann die Austragsöffnung 2a geöffnet oder geschlossen oder auch in ihrer Größe verändert werden.

Die Laserscanner 4 sind derart angeordnet, dass sich der Scanbereich 4a im Wesentlichen unmittelbar unter der Austragsöffnung 2a befindet. Der Beton 3 fällt demnach im Wesentlichen unmittelbar nach dem Ausbringen aus der Austragsöffnung 2a durch den Messbereich 4a.

Eine Datenverarbeitungseinheit und Regelund/oder Steuervorrichtung sind in dieser Figur nicht dargestellt.

Die Figur 3b zeigt den Schnitt X-X der Figur 3a. Es ist erkennbar, dass der Beton 3 im Wesentlichen mittig zwischen den Laserscannern 4 durch den Messbereich 4a fällt.

Es ist auch erkennbar, wie die Laserscanner 4 über mehrere, konsekutive Messungen (Laserstrahlen 4b) ein Profil des Betons 3 erkennen. Die Pfeile deuten an, dass die Laserscanner 4 mit gegenläufigen Scanrichtungen betrieben werden.

Bezugszeichenliste:

| | |
|---|---|
| 1 | Vorrichtung |
| 2 | Verteilerkübel |
| | 2a Austragsöffnung |
| | 2b Schließvorrichtung |
| 3 | Beton |
| 4 | Laserscanner |
| | 4a Scanbereich |
| | 4b Laserstrahl |
| 0 | Ursprung globales Koordinatensystem |
| α | Winkel |
| A | Querschnittsfläche |

d    Abstand
h    Fallhöhe
P    Messpunk t

## Patentansprüche

1. Verfahren zur Bestimmung eines Austrages eines Verteilerkübels (2), **gekennzeichnet durch** folgende Schritte:

   - Ausbringen eines Baustoffs (3), insbesondere Beton oder zementgebundener Baustoff, aus einem Verteilerkübel (2),
   - Erfassen zumindest eines Parameters, vorzugsweise einer Querschnittsfläche (A), eines aus einem Verteilerkübel (2) austretenden Baustoffs (3) mittels zumindest eines Laserscanners (4), vorzugsweise eines Lidar-Rotorscanners,
   - Ermitteln eines Volumenstroms des austretenden Baustoffs (3) mit dem von dem zumindest einen Laserscanner (4) erfassten Parameter, und
   - Ermitteln eines bereits ausgebrachten Volumens an Baustoff (3) aus dem ermittelten Volumenstrom.

2. Verfahren nach Anspruch 1, wobei das Erfassen des zumindest einen Parameters mittels zumindest zweier Laserscanner (4) erfolgt.

3. Verfahren nach Anspruch 2, wobei die zumindest zwei Laserscanner (4) mit gegenläufigen Scanrichtungen betrieben werden.

4. Verfahren nach einem der Ansprüche 1 bis 3, wobei der zumindest eine Parameter eine Querschnittsfläche (A) des aus dem Verteilerkübel (2) austretenden Baustoffs (3) ist.

5. Verfahren nach Anspruch 4, wobei die Erfassung der Querschnittsfläche (A) zumindest die folgenden Schritte umfasst:

   - Bestimmen einer Vielzahl an Messpunkten (P) an einer Kontur des aus dem Verteilerkübel (2) austretenden Baustoffs (3) in einem, vorzugsweise globalen, Koordinatensystem mittels des zumindest einen Laserscanners (4),
   - Verbinden der Messpunkte (P) zu einem Profil oder Halbprofil des aus dem Verteilerkübel (2) austretenden Baustoffs (3), und
   - Ermitteln der Querschnittsfläche (A) aus dem Profil oder dem Halbprofil.

6. Verfahren nach einem der Ansprüche 4 oder 5, wobei das Ermitteln des Volumenstroms zumindest folgende Schritte umfasst:

   - Bestimmen einer Geschwindigkeit des aus dem Verteilerkübel (2) austretenden Baustoffs (3) beim Eintreten in einen Scanbereich (4a) des zumindest einen Laserscanners (4), und
   - Ermitteln des Volumenstroms aus der Querschnittsfläche (A) und der bestimmten Geschwindigkeit.

7. Verfahren nach Anspruch 6, wobei die Geschwindigkeit aus einer Fallhöhe (h) des Baustoffs (3) zwischen einer Austragsöffnung (2a) eines Verteilerkübels (2) und des Scanbereichs (4a) des zumindest einen Laserscanners (4) bestimmt wird.

8. Verfahren nach einem der Ansprüche 4 bis 7, wobei das zwischen zwei erfassten Querschnittsflächen (A) ausgebrachte Volumen aus dem Volumenstrom und einer Zeit zwischen dem Erfassen der zwei Querschnittsflächen (A) ermittelt wird.

9. Verfahren nach Anspruch 8, wobei das bereits ausgebrachte Volumen an Baustoff (3) aus der Summe der ausgebrachten Volumina zwischen jeweils zwei erfassten Querschnittsflächen (A) ermittelt wird.

10. Verfahren nach einem der Ansprüche 1 bis 9, wobei in einem weiteren Verfahrensschritt ein Baustoffaustrag aus dem Verteilerkübel (2) angehalten wird, wenn ein vorbestimmtes Volumen an Baustoff (3) ausgetragen wurde.

11. Vorrichtung (1) zur Bestimmung eines Austrages eines Verteilerkübels (2) mit einem Verfahren nach einem der Ansprüche 1 bis 10, mit:

   - einem Verteilerkübel (2), wobei der Verteilerkübel (2) zumindest eine Austragsöffnung (2a) zum Ausbringen von Baustoff (3) aufweist,
   - zumindest einem Laserscanner (4), vorzugsweise ein Lidar-Rotorscanner, zum Erfassen zumindest eines Parameters, vorzugsweise einer Querschnittsfläche (A), eines aus einem Verteilerkübel (2) austretenden Baustoffs (3), und
   - eine Datenverarbeitungseinheit zum Ermitteln eines Volumenstroms des austretenden Baustoffs (3) und eines bereits ausgebrachten Volumens an Baustoff.

12. Vorrichtung nach Anspruch 11, wobei zumindest zwei Laserscanner (4) vorgesehen sind.

13. Vorrichtung nach einem der Ansprüche 11 oder 12, wobei der zumindest eine Laserscanner (4) im Bereich der zumindest einen Austrittsöffnung (2a) am Verteilerkübel (2) angeordnet ist.

**14.** Vorrichtung nach einem der Ansprüche 11 bis 13, wobei der zumindest eine Laserscanner (4) eine Messfrequenz von zumindest 600 Hz aufweist.

**15.** Vorrichtung nach einem der Ansprüche 11 bis 14, wobei eine Regel- und/oder Steuervorrichtung zur Regelung und/oder Steuerung eines Baustoffaustrags auf Basis des bereits ausgebrachten Volumens an Baustoff (3) vorgesehen ist, vorzugsweise wobei die Regel- und/oder Steuervorrichtung Teil der Datenverarbeitungseinheit ist.

Fig. 1

Fig. 2

Fig. 3a

Fig. 3b

Europäisches
Patentamt

European
Patent Office

Office européen
des brevets

# EUROPÄISCHER RECHERCHENBERICHT

Nummer der Anmeldung

EP 22 20 4168

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2020/223097 A1 (KOPPELAAR GREG [CA] ET AL) 16. Juli 2020 (2020-07-16) | 1,10,11, 13,15 | INV. G01F13/00 |
| Y | * Absätze [0062] – [0068], [0075], [0082], [0087], [0088]; Abbildungen 1-16 * | 2-9,12, 14 | B28B13/00 B28C7/04 B28C7/06 |
| | ----- | | B28C7/16 |
| Y | CN 113 706 601 A (CHINA RAILWAY ENGINEERING EQUIPMENT GROUP CO LTD) 26. November 2021 (2021-11-26) * Zusammenfassung; Abbildungen 1-9 * | 2-9,12, 14 | B28C9/00 E04G21/02 E04G21/04 G01B9/00 |
| | ----- | | G01B11/00 |
| Y | DE 196 31 926 A1 (SIEMENS AG [DE]) 12. Februar 1998 (1998-02-12) * Spalte 2, Zeile 5 – Spalte 3, Zeile 43; Abbildungen 3,4,5 * | 4-9 | G01B21/00 G01C15/00 G01F15/075 G01F17/00 |
| | ----- | | G01F22/00 |
| Y | CN 109 781 196 A (SUZHOU WANWEN INFORMATION ENG CO LTD) 21. Mai 2019 (2019-05-21) * Zusammenfassung; Abbildungen 1-4 * | 4-9 | G01S17/00 G06K7/00 |
| | ----- | | |
| Y | EP 2 246 673 A1 (SICK AG [DE]) 3. November 2010 (2010-11-03) * Absätze [0003], [0015], [0017], [0019], [0020], [0024] – [0028]; Anspruch 1; Abbildungen 1-7 * | 4-9 | **RECHERCHIERTE SACHGEBIETE (IPC)** G01F G06K G01S |
| | ----- | | G01B G01C E04G B29C B28B B28C |

Der vorliegende Recherchenbericht wurde für alle Patentansprüche erstellt

| Recherchenort | Abschlußdatum der Recherche | Prüfer |
|---|---|---|
| Den Haag | 27. April 2023 | Rambaud, Dilek |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

....................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 20 4168

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-04-2023

| Im Recherchenbericht angeführtes Patentdokument | Datum der Veröffentlichung | Mitglied(er) der Patentfamilie | Datum der Veröffentlichung |
|---|---|---|---|
| US 2020223097 A1 | 16-07-2020 | CA      3067975 A1<br>US  2020223097 A1 | 16-07-2020<br>16-07-2020 |
| CN 113706601 A | 26-11-2021 | KEINE | |
| DE 19631926 A1 | 12-02-1998 | KEINE | |
| CN 109781196 A | 21-05-2019 | KEINE | |
| EP 2246673 A1 | 03-11-2010 | KEINE | |

EPO FORM P0461

Für nähere Einzelheiten zu diesem Anhang : siehe Amtsblatt des Europäischen Patentamts, Nr.12/82